(19)

Europäisches
Patentamt
European
Patent Office
Office européen
des brevets

(11) **EP 4 645 750 A1**

(12) **EUROPEAN PATENT APPLICATION**

(43) Date of publication:
**05.11.2025 Bulletin 2025/45**

(51) International Patent Classification (IPC):
***H04L 9/08*** (2006.01)

(21) Application number: **24173139.7**

(52) Cooperative Patent Classification (CPC):
**H04L 9/0855**

(22) Date of filing: **29.04.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Deutsche Telekom AG**
**53113 Bonn (DE)**
• **VeriQloud**
**92120 Montrouge (FR)**

(72) Inventors:
• **RIBEIRO SENA, Matheus**
**14129 Berlin (DE)**

• **GEITZ, Marc**
**58089 Hagen (DE)**
• **BRAUN, Ralf-Peter**
**12305 Berlin (DE)**
• **HARDER, Georg**
**75013 Paris (FR)**
• **KAPLAN, Marc**
**92120 Montrouge (FR)**

(74) Representative: **RDL Patentanwälte PartG mbB**
**Senefelderstrasse 26**
**70176 Stuttgart (DE)**

Remarks:
Amended claims in accordance with Rule 137(2) EPC.

(54) **A QKDN AND A METHOD FOR RELAYING A SECRET KEY WITHIN THE QKDN**

(57) A method for relaying a secret key within a quantum key distribution, QKD, network, QKDN, wherein respective first QKD nodes and second QKD nodes of respective first and second QLines of a QKDN sift respective first and second QKD keys from photon pulses emitted by respective Alice terminal QKD nodes of the first and second QLines at respective first and second wavelengths and detected by a respective Bob terminal QKD nodes, the Alice terminal QKD nodes and the first QKD nodes linked to an input side of an arrayed wavelength grating, AWG, and the Bob terminal QKD nodes and the second QKD node linked to an output side of the AWG; and a QKDN.

Fig. 1

**EP 4 645 750 A1**

**Description**

The invention relates to a method for relaying a secret key within a quantum key distribution, QKD, network, QKDN. A first QKD node of a first QLine of a QKDN and a second QKD node of the first QLine sift a first QKD key from photon pulses emitted by an Alice terminal QKD node of the first QLine having a first wavelength and received by a Bob terminal QKD node of the first QLine, the Alice terminal QKD node and the first QKD node linked to an input side of an arrayed wavelength grating, AWG, and the Bob terminal QKD node and the second QKD node linked to an output side of the AWG. A first QKD node of a second QLine of the QKDN and a second QKD node of the second QLine sift a second QKD key from photon pulses emitted by an Alice terminal QKD node of the second QLine having a second wavelength different from the first wavelength and received by a Bob terminal QKD node of the second QLine, the Alice terminal node and the first QKD node linked to the input side of the AWG and the Bob terminal QKD node and the second QKD node linked to the output side of the AWG. The invention further relates to a QKDN.

The QLine is a linear QKDN comprising an ordered sequence, i.e., linear arrangement of quantum optically linked QKD nodes and has been described by, e.g., M. Doosti et al. "Establishing shared secret keys on quantum line networks: protocol and security", published in 2023 as arXiv preprint arXiv:2304.01881. The QLine is configured for QKD keys being shared by a first QKD node of the QLine and a second QKD node of the QLine. Each two of the first and second QKD nodes of the QLine may securely relay a secret key to the respective other of the first and second QKD nodes xored with a shared QKD key, i.e., encrypted.

The secret key and the QKD key, respectively, comprise a sequence of random bits. The secret key is used for encrypting payload data. In contrast, the QKD key is used for encrypting the secret key to be relayed and, thus, securing the relay of the secret key. The encrypted secret key may be transmitted digitally, i.e., not quantum-optically from the first QKD node to the second QKD node or vice versa while the QKD key is shared quantum-optically between the first QKD node and the second QKD node.

The QLine comprises an Alice terminal QKD node configured for emitting photon pulses and a Bob terminal QKD node configured for detecting photon pulses. The photons of each photon pulse are coherent, i.e., have an identical phase, and form a wave packet. Theoretically a single photon is sufficient for instantiating a photon pulse. The Alice terminal QKD node and the Bob terminal QKD node are arranged at opposite ends of the QLine. The QLine may additionally comprise intermediate QKD nodes arranged between the Alice terminal QKD node and the Bob terminal QKD node.

It is noted that in the QLine only the Alice terminal QKD node has a laser configured for emitting photon pulses. Accordingly, only the Bob terminal QKD node has a detector configured for detecting the photon pulses emitted by the laser of the Alice terminal QKD node. Thus, the QLine is a very economic choice for implementing the QKDN. Additionally, the QLine represents a complete logical mesh of the QKDN despite the strictly linear arrangement of the QKD nodes. Each two QKD nodes of the QLine may share a QKD key.

A first QLine using photon pulses having a first wavelength and a second QLine different from the first QLine and using photon pulses having a second wavelength different from the first wavelength may be linked to each other via an arrayed waveguide grating, AWG.

The AWG divides each QLine of the first QLine and the second QLine into two branches wherein a respective first branch comprises the Alice terminal QKD node and a respective second branch comprises the Bob terminal QKD node.

The AWG is configured for routing the photon pulses depending on their respective wavelengths and, hence, allows the first QLine and the second QLine for sharing QKD nodes without interfering on quantum-optical level. A time-multiplexer controlling both the first QLine and the second QLine may timely separate the photon pulses of the first QLine and the second QLine.

However, while a secret key may be securely relayed between each two QKD nodes of the same QLine, the secret key cannot be securely relayed between any two QKD nodes of different QLines even if the different QLines are linked to each other via an AWG.

It is, therefore, an object of the invention, to suggest a method for securely relay a secret key between any two QKD nodes of different QLines linked to each other via an AWG. Another object of the invention is to provide a QKDN.

A first aspect of the invention is a method for relaying a secret key within a quantum key distribution, QKD, network, QKDN, wherein a first QKD node of a first QLine of a QKDN and a second QKD node of the first QLine sift a first QKD key from photon pulses emitted by an Alice terminal QKD node of the first QLine having a first wavelength and detected by a Bob terminal QKD node of the first QLine, the Alice terminal QKD node and the first QKD node linked to an input side of an arrayed wavelength grating, AWG, and the Bob terminal QKD node and the second QKD node linked to an output side of the AWG; a first QKD node of a second QLine of the QKDN and a second QKD node of the second QLine sift a second QKD key from photon pulses emitted by an Alice terminal QKD node of the second QLine having a second wavelength different from the first wavelength and detected by a Bob terminal QKD node of the second QLine, the Alice terminal node and the first QKD node linked to the input side of the AWG and the Bob terminal QKD node and the second QKD node linked to the output side of the AWG. The first QKD node of the first QLine may be considered a source QKD node as the secret key is relayed from the first QKD node of the first QLine. Accordingly, the first QKD node of the second QLine may be considered a target QKD node as the secret key is relayed to the first QKD node of the second QLine.

Regardless of the wavelength, each photon pulse may be represented by a superposition of two orthogonal quantum states according to $|\psi\rangle = \frac{1}{\sqrt{2}}\left(|0\rangle + e^{j\phi}|1\rangle\right)$ and represents a qubit potentially resulting in a bit of a QKD key to be sifted, e.g., according to the BB84 protocol. The angle $\phi \in \{0, \frac{\pi}{2}, \pi, \frac{3\pi}{2}\}$ defines a phase of the photon pulse. The sifting is described in greater detail below.

Herein, the attributes "first" and "second" of the QLines are arbitrary and for distinction only and may be readily exchanged. In other words, the secrete key may be relayed in either direction, i.e., from the first QKD node of the first QLine to the first QKD node of the second QLine or from the first QKD node of the second QLine to the first QKD node of the first QLine. In contrast, the attributes "first" and "second" of the QKD nodes indicate different sides of the AWG or different branches of the QLines. While the first QKD node is linked to the input side of the AWG as is the Alice terminal QKD node, the second QKD node is linked to the output side of the AWG as is the Bob terminal QKD node.

According to the invention, the first QLine and the second QLine share the second QKD node and the Bob terminal QKD node, and the first QKD node of the first QLine relays a secret key xored with the sifted first QKD key to the shared second QKD node and the shared second QKD node relays the secret key to the first QKD node of the second QLine xored with the sifted second QKD key. The shared second QKD node may be considered a transition QKD node.

Relaying the secret key relies on the fact that second branches of the first QLine and the second QLine at least partially coincide, i.e., have at least the Bob terminal QKD node in common. In case the first QLine and the second QLine share only one QKD node, namely the Bob terminal QKD node, the shared Bob terminal QKD node is the shared second QKD node.

As a shared QKD node, the second QKD node is configured to fully cooperate with the first QLine at the first wavelength in a first time slot and with the second QLine at the second wavelength in a second time slot, the AWG separating and routing the photon pulses dependent on the respective wavelengths.

The shared second QKD node may be the shared Bob terminal QKD node or an intermediate QKD node linked to the output side of the AWG and shared by the first QLine and the second QLine. The first QKD node of the first QLine may be the Alice terminal QKD node or an intermediate QKD node exclusive to the first QLine. The first QKD node of the second QLine may be the Alice terminal QKD node of the second QLine or an intermediate QKD node exclusive to the second QLine.

Generally speaking, the secret key is relayed from a first branch of the first QLine via a second branch at least partially shared by the first QLine and the second QLine to a first branch of the second QLine.

Herein, each QKD node of a QLine arranged between an Alice terminal QKD node and a Bob terminal QKD node of a QLine is referred to as an intermediate QKD node. Each intermediate QKD node is configured for acting on each photon pulse as a quantum mechanical unitary operator, i.e., neither for detecting nor for emitting a photon impulse. A quantum mechanical unitary operator, by definition, does not affect a squared amplitude of a quantum mechanical wave function. Thus, the intermediate QKD node does not require a laser for emitting photon pulses nor a photon detector for detecting photon pulses which allows for a very simple and economic QKDN implementation.

Preferably, the shared second QKD node buffers the sifted first QKD key in a local key storage, LKS, of the shared second QKD node and xors the relayed xored secret key with the buffered first QKD key and with the sifted second QKD key or wherein the shared second QKD node xors the sifted first QKD key with the sifted second QKD key resulting in a transitional QKD key, buffers the transitional QKD key and xors the relayed xored secret key with the buffered transitional QKD key. Buffering the QKD key or the transitional QKD key allows the shared second QKD node for transferring the secret key from the first QLine to the second QLine. The shared second QKD node may be considered a transit QKD node allowing the secret key for transiting from the first QLine to the second QLine and, hence, to be relayed from the first QLine to the second QLine.

Advantageously, each photon pulse is randomly phase-shifted by each QKD node of the respective QLine. Applying a phase-shift is a unitary operation. The photon pulse is neither detected nor emitted.

Randomly phase-shifting may comprise applying a phase-shift $\phi_p = \pi(b_p/2 + s_p)$ to the photon pulse, wherein $\phi_p$ is the phase-shift determined by the p-th QKD node and $b_p$, $s_p$ are random basis and key bits, respectively, determined by the p-th QKD node. As a result, the QLine totally applies a phase-shift $\Phi = \sum_{p \in QLine} \phi_p$, to the photon pulse.

In an embodiment, sifting the QKD key comprises determining each bit of the QKD key dependent on $b_p$, $s_p$ published by the Bob terminal QKD node. Each bit $s_p$ of a QKD key may be successfully sifted by the first QKD node and the second QKD node when the first QKD node and the second QKD node and the Bob terminal QKD node accidentally choose identical basis bits. The sifted QKD key comprises a plurality of successively sifted bits.

In a favorable embodiment, a partition of a composed secret key is relayed as the secret key, different partitions of the composed secret key being relayed by different shared second QKD nodes. Of course, the first QKD node of the second QLine may concatenate the secret keys in order to obtain the composed secret key. Each of the secret key and the QKD key is an ordered sequence of bits, i.e., binary digits, and may, for instance, comprise 256 bits. In case each partition of the composed secret key comprises 128 bits, the composed secret key comprises an integer multiple of 128 bits. For instance, two concatenated partitions of 128 bits yield a composed secret key of 256 bits. The order of the partitions is obviously relevant and, hence, has to be preserved.

The relaying of the secret key is decentralized, hence, reducing a risk of an eavesdropper attack. In case the composed secret key is referred to as the secret key, the secret key may be divided into a plurality of key partitions each key partition being relayed by a different relaying QKD node.

In another favorable embodiment, a precursor key of a derived secret key is relayed as the secret key, different precursor keys of the derived secret key being relayed by different shared second QKD nodes. Both the first QKD node of the first QLine and the first QKD node of the second QLine may derive the derived secret key from the secret keys, particularly by applying a key derivation function, KDF (see below), to the secret keys. Each of the precursor keys of the derived secret key and the derived secret keys may comprise an identical number of bits, e.g., 256 bits. In case the KDF is symmetrical with respect to the precursor keys, the order of the precursor keys is obviously irrelevant and may, hence, occur accidentally.

The secret key is preferably relayed within a QKDN comprising a plurality of QLines connected via the AWG. The plurality of QLines allows for a wide variability of shared second QKD nodes reducing significantly the risk of a successful eavesdropper attack.

Another aspect of the invention is a quantum key distribution, QKD, network, QKDN, comprising a first QLine using photon pulses having a first wavelength and a second QLine using photon pulses having a second wavelength different from the first wavelength.

According to the invention, the first QLine and the second QLine linked to an arrayed waveguide grating, AWG, having different Alice terminal QKD nodes and sharing a Bob terminal QKD node, the QKDN configured for carrying out a method according to an embodiment of the invention. In other words, the QKDN has a Y-topology wherein the both Alice terminal QKD nodes are at the upper ends of the Y and the shared Bob terminal QKD node is at the lower end of the Y.

It is preferred that each Alice terminal QKD node comprises a photon pulse emitter and/or the Alice terminal QKD node of the first QLine is configured for emitting photon pulses having the first wavelength and/or the Alice terminal QKD node of the second QLine is configured for emitting photon pulses having the second wavelength. The Alice terminal QKD nodes are the only QKD nodes of the QKDN having a laser.

It is further preferred that the shared Bob terminal QKD node comprises a photon pulse detector and/or is configured for detecting photon pulses having the first wavelength and photon pulses having the second wavelength. The shared Bob terminal QKD node is the only QKD node of the QKDN having a photon detector.

In a favorable embodiment, each QKD node of each QLine comprises a phase modulator and/or is configured for applying a random phase-shift to each photon pulse and/or comprises a local key storage, LKS, and/or is configured for buffering a sifted QKD key or a transitional QKD key resulting from xoring a sifted first QKD key with a sifted second QKD key and/or each first QKD node comprises a key derivation function, KDF. The phase modulator implements a unitary operation acting on each photon pulse. The LKS is configured for temporarily storing a QKD key or a transitional QKD key, i.e., bits of the respective QKD key. The KDF is configured for concatenating secret keys, the concatenated secret keys forming a composed secret key, or for deriving secret keys, the derived secret keys being derived from precursor keys.

Advantageously, at least one QLine of the first and second QLines comprises at least one intermediate QKD node different from both the respective Alice terminal QKD node and the respective Bob terminal QKD node. The intermediate QKD node comprises a phase modulator as an only quantum-optical component.

The at least one intermediate QKD node may be shared by the first QLine and the second QLine and linked to an output side of the AWG or exclusive to either the first QLine and the second QLine and linked to an input side of the AWG. In other words, the second branch of the first QLine and the second branch of the second QLine may comprise the intermediate QKD node or the first branch of the first QLine or the first branch of the second QLine may comprise the at least one intermediate QKD node. Each intermediate QKD node of a second branch increases a number of potential shared second QKD nodes and, hence, a security of the QKDN.

In a preferred embodiment, the QKDN comprises a plurality of different QLines connected via the AWG. Each QKD node of each first branch may be the first QKD node, i.e., the source QKD node or the target QKD node, the first branch comprising the Alice terminal QKD node. Each QKD node of each second branch may be the shared second QKD node, i.e., the transit QKD node, the second branch comprising the Bob terminal QKD node.

An essential advantage of the invention is that a secret key is relayed between two different QLines connected to each other via an AWG, particularly between respective first branches of the two different QLines. Thus, the secret key may be relayed more widely within a QKDN comprising multiple QLines connected to each other by an AWG. Moreover, this advantage is obtained at relatively low costs. The security may be essentially increased by relaying partitions of a composed secret key or precursor keys of a derived secret key via different shared second QKD nodes, i.e., transit QKD nodes.

It shall be understood that the features described previously and to be described subsequently may be used not only in the indicated combinations but also in different combinations or on their own without leaving the scope of the present invention.

The invention is described in detail by means of exemplary embodiments and with reference to the accompanying drawings. Like components are indicated by like reference numerals throughout the drawings. Therein:

Fig. 1     schematically shows a diagram of a QKDN according to a first embodiment of the invention;

Fig. 2     schematically shows a diagram of a QKDN according to a second embodiment of the invention;

Fig. 3     schematically shows a diagram of a QKDN according to a third embodiment of the invention.

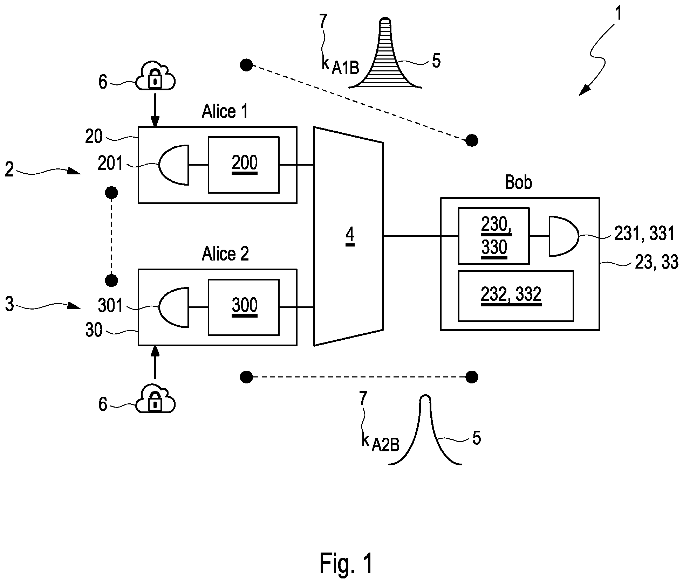

Fig. 1 schematically shows a diagram of a QKDN 1 according to a first embodiment of the invention. The quantum key distribution, QKD, network, QKDN, 1, comprises a first QLine 2 using photon pulses having a first wavelength and a second QLine 3 using photon pulses having a second wavelength different from the first wavelength. The first QLine 2 and the second QLine 3 are linked to an arrayed waveguide grating, AWG, 4. The QKD nodes of the first QLine 2, the second QLine 3 and the AWG 4 are linked by optical fibers each optical fiber connecting two adjacent QKD nodes of the respective QLine 2, 3. The shown QKDN 1 may be considered a minimum inventive QKDN.

The first QLine 2 comprises an Alice terminal QKD node 20, called "Alice 1", and a Bob terminal QKD node 23. The second QLine 3 comprises an Alice terminal QKD node 30, called "Alice 2", and a Bob terminal QKD node 33. Accordingly, the first QLine 2 and the second QLine 3 have different first terminal QKD nodes 20, 30. However, the first QLine 2 and the second QLine 3 share the Bob terminal QKD node 23, 33, called "Bob".

Each first terminal QKD node 20, 30 may comprise a photon emitter 201, 301. The Alice terminal QKD node 20 of the first QLine 2 may be configured for emitting photon pulses having the first wavelength. The Alice terminal QKD node 30 of the second QLine 3 may be configured for emitting photon pulses having the second wavelength.

The shared Bob terminal QKD node 23, 33 may comprise a photon detector 231, 331 and/or be configured for detecting photon pulses 5 having the first wavelength (symbolized by a shaded wave packet) and photon pulses 5 having the second wavelength (symbolized by a blank wave packet). The Bob terminal QKD node 23, 33 may further comprise a local key storage, LKS, 232, 332 and/or be configured for buffering a sifted QKD key 7 or transitional QKD key resulting from xoring a sifted first QKD key 7 with a sifted second QKD key 7 (see below).

Each QKD node of each QLine 2, 3 may comprise a phase modulator 200, 230, 300, 330 and/or be configured for applying a random phase-shift to each photon pulse 5.

The QKDN 1 is configured for carrying out a method according to an embodiment of the invention as follows for relaying a secret key 6 within the quantum key distribution, QKD, network, QKDN, 1.

A first QKD node of the first QLine 2 of the QKDN 1 and a second QKD node of the first QLine 2 sift a first QKD key 7 from photon pulses 5 emitted by the Alice terminal QKD node 20 of the first QLine 2 having the first wavelength and detected by the Bob terminal QKD node 23 of the first QLine 2, the Alice terminal QKD node 20 and the first QKD node linked to an input side of the arrayed wavelength grating, AWG, 4, and the Bob terminal QKD node 23 and the second QKD node linked to an output side of the AWG 4. The first QKD node of the first QLine 2 is the Alice terminal QKD node 20, i.e., "Alice 1".

A first QKD node of the second QLine 3 of the QKDN 1 and a second QKD node of the second QLine 3 sift a second QKD key 7 from photon pulses 5 emitted by the Alice terminal QKD node 30 of the second QLine 3 having the second wavelength and detected by the Bob terminal QKD node 33 of the second QLine 3, the Alice terminal QKD node 30 and the first QKD node linked to the input side of the AWG 4, and the Bob terminal QKD node 23 and the second QKD node linked to the output side of the AWG 4. The first QKD node of the second QLine 3 is the Alice terminal QKD node 30, i.e., "Alice 2".

The first QLine 2 and the second QLine 3 share the second QKD node and the Bob terminal QKD node 23, 33. The shared second QKD node is the shared Bob terminal QKD node 23, 33, i.e., "Bob".

The first QKD node of the first QLine 2 relays the secret key 6 xored with the sifted first QKD key 7 to the shared second QKD node. The shared second QKD node may buffer the sifted first QKD key 7 in a local key storage, LKS, 332 of the shared second QKD node and xor the relayed xored secret key 6 with the buffered first QKD key 7 and with the sifted second QKD key 7.

Alternatively, the shared second QKD node may xor the sifted first QKD key 7 with the sifted second QKD key 7 resulting in a transitional QKD key, buffer the transitional QKD key and xor the relayed xored secret key 6 with the buffered transitional QKD key. As a result, the shared second QKD node then relays the secret key 6 to the first QKD node of the second QLine 3 xored with the sifted second QKD key 7.

Each photon pulse 5 may be randomly phase-shifted by each QKD node of the respective QLine 2, 3. Preferably, randomly phase-shifting comprises applying a phase-shift $\phi_p = \pi(b_p/2 + s_p)$ to the photon pulse 5, wherein $\phi_p$ is the phase-shift determined by a p-th QKD node and $b_p$, $s_p$ are random basis and key bits, respectively, determined by the p-th QKD node. Sifting the QKD key 7 may comprise determining each bit of the QKD key

7 dependent on $b_p$, $s_p$ published by the Bob terminal QKD node 20, 30.

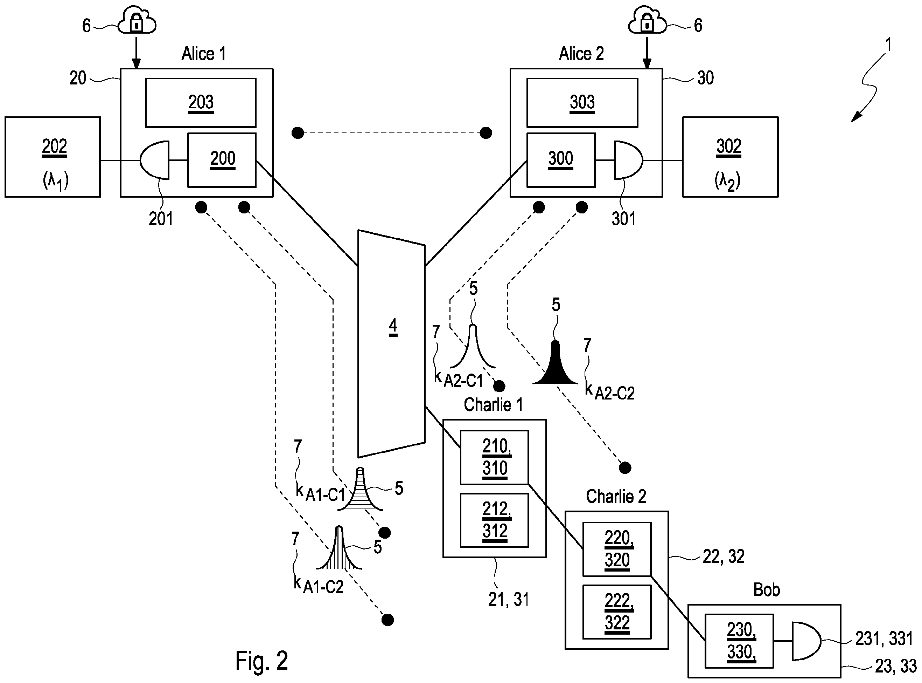

Fig. 2 schematically shows a diagram of a QKDN 1 according to a second embodiment of the invention. The QKDN 1 has the basic structure of the QKDN shown in Fig. 1 and illustrates additional features not shown in Fig. 1 but hides features of the QKDN shown in Fig. 1.

For instance, each first QKD node may comprise a key derivation function, KDF, 203, 303 and/or each Alice terminal QKD node 20, 30 may comprise a laser 202, 302 configured for providing the respective photon pulse emitters 201, 301 with photons. In contrast, the LKS 332 of the shared Bob terminal QKD node 23, 33 is hidden.

Each laser 202, 302 may be tunable, i.e., a wavelength $\lambda_1$, $\lambda_2$ of the provided photons may be adjusted. The laser 202 of the Alice terminal QKD node 20 of the first QLine 2 provides photons having the first wavelength $\lambda_1$. The laser 302 of the Alice terminal QKD node 30 of the second QLine 3 provides photons having the second wavelength $\lambda_2$.

Going beyond the QKDN shown in fig. 1, at least one Qline 2, 3 of the first and second Qlines 2, 3 comprises at least one intermediate QKD node 21, 22, 31, 32 different from both the respective Alice terminal QKD node 20, 30 and the respective Bob terminal QKD node 23, 33. Exemplarily, the first QLine 2 comprises two intermediate QKD nodes 21, 22 and the second QLine 3 comprises two intermediate QKD nodes 31, 32.

Each intermediate QKD node 21, 22, 31, 32 may comprise a phase modulator 210, 220, 310, 320 and/or is configured for applying a random phase-shift to each photon pulse 5. Each intermediate QKD node 21, 22, 31, 32 may further comprise a local key storage, LKS, 212, 222, 312, 322 and/or be configured for buffering a sifted first QKD key 7 or a transitional QKD key resulting from xoring a sifted first QKD key 7 with a sifted second QKD key 7.

The at least one intermediate QKD node 21, 22, 31, 32 is shared by the first QLine 2 and the second QLine 3 and linked to the output side of the AWG 4. Exemplarily, the first QLine 2 and the second QLine 3 share a first intermediate QKD node 21, 31, called "Charlie 1", and a second intermediate QKD node 22, 32, called "Charlie 2".

Of course, intermediate QKD nodes may also be exclusive to either the first QLine 2 or the second QLine 3 and linked to the input side of the AWG 4 which is not shown for the benefit of an easy comprehension. Exclusive intermediate QKD nodes may also be first QKD nodes, i.e. source QKD nodes and target QKD nodes.

The at least one intermediate QKD node 21, 22, 31, 32 may add additional steps to the method described above.

A first shared second QKD node may be the first intermediate QKD node 21, 31 and a second shared second QKD node may be the second intermediate QKD node 22, 32, the first intermediate QKD node 21, 31 and the second intermediate QKD node 22, 32 shared by the first QLine 2 and the second QLine 3.

A partition of a composed secret key may be relayed as the secret key 6 wherein different partitions of the composed secret key are relayed by different relaying QKD nodes 21, 22, 31, 32. For instance, a first partition of the composed secret key may be relayed to the first intermediate QKD node 21, 31 and a second partition of the composed secret key may be relayed to the second intermediate QKD node 22, 32.

Alternatively, a precursor key of a derived secret key is relayed as the secret key 6, different precursor keys of the derived secret key being relayed by different shared second QKD nodes 21, 22, 31, 32. For instance, a first precursor key of the derived secret key may be relayed to the first intermediate QKD node 21, 31 and a second precursor key of the derived secret key may be relayed to the second intermediate QKD node 22, 32.

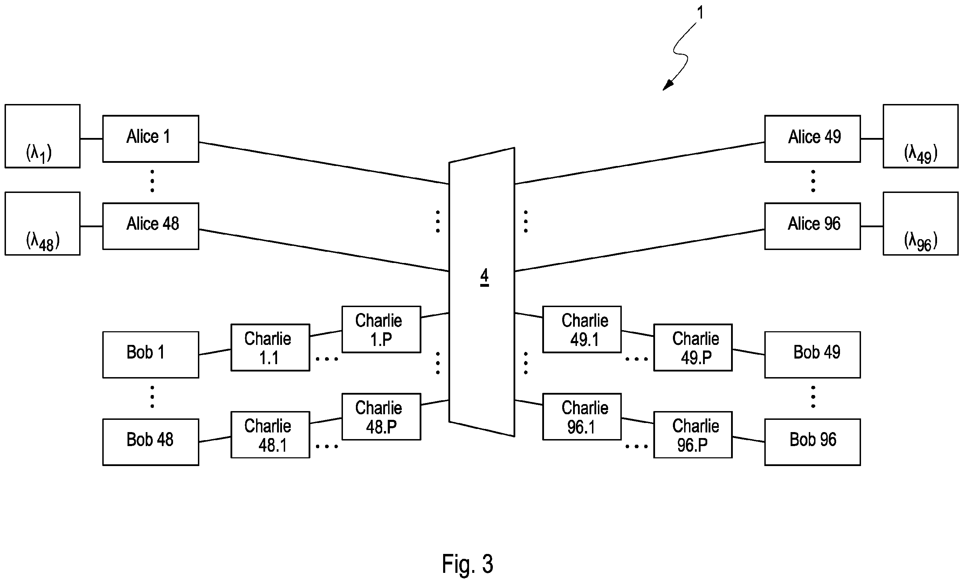

Fig. 3 schematically shows a diagram of a QKDN 1 according to a third embodiment of the invention. Again, the QKDN 1 has the basic structure of the QKDN shown in Fig. 2 and hides features of the QKDN shown in Fig. 2.

For instance, no single photon emitter, no single photon detector, no phase modulator, no LKS and no KDF is illustrated.

Going beyond the QKDN shown in fig. 2, the QKDN 1 comprises a plurality of different QLines linked to the AWG 4, particularly more than two different QLines. Exemplarily, the QKDN 1 comprises 96 different QLines linked to the AWG 4. The Alice terminal QKD nodes are called "Alice 1" to "Alice 96". The Bob terminal QKD nodes are called "Bob 1" to "Bob 2". Each QKD node of each first branch may be a first QKD node, i.e., a source QKD node or a target QKD node. Each QKD node of each second branch may be a second QKD node, i.e., a transit QKD node.

The 96 different QLines use photon pulses having 96 different wavelength $\lambda_1$, ..., $\lambda_{96}$. Accordingly, the AWG 4 is configured as a 96x96 arrayed waveguide grating.

Additionally, each QLine has a plurality of intermediate QKD nodes, particularly more than two intermediate QKD nodes, called "Charlie 1.1" to "Charlie 1.P", ..., "Charlie 96.1" to "Charlie 96.P", where P is the number of intermediate QKD nodes of each QLine. Of course, P may also be different between the QLines.

Secret keys are relayed from each Alice terminal QKD node "Alice 1", ..., "Alice 96" to each other Alice terminal QKD node "Alice 1", ..., "Alice 96". Each of the intermediate QKD nodes "Charlie 1.1", ..., "Charlie 96.P" or Bob terminal QKD nodes "Bob 1", ..., "Bob 96" may be a shared second QKD node. In case a composed secret key is partitioned, partitions of the composed secret key may even be relayed by intermediate QKD nodes "Charlie 1.1", ..., "Charlie 96.P" of different QLines, i.e., a plurality of different shared second QKD nodes of different QLines may be involved in relaying the composed secret key.

Reference Numerals

| | |
|---|---|
| 1 | QKDN |
| 2 | first QLine |
| 20 | Alice terminal QKD node, "Alice" |
| 200 | phase modulator |
| 201 | photon emitter |
| 202 | laser |
| 203 | KDF |
| 21 | intermediate QKD node, "Charlie" |
| 210 | phase modulator |
| 212 | LKS |
| 22 | intermediate QKD node, "Charlie" |
| 220 | phase modulator |
| 222 | LKS |
| 23 | second terminal QKD node, "Bob" |
| 230 | phase modulator |
| 231 | photon detector |
| 232 | LKS |
| 3 | second QLine |
| 30 | Alice terminal QKD node, "Alice" |
| 300 | phase modulator |
| 301 | photon emitter |
| 302 | laser |
| 303 | KDF |
| 31 | intermediate QKD node, "Charlie" |
| 310 | phase modulator |
| 312 | LKS |
| 32 | intermediate QKD node, "Charlie" |
| 320 | phase modulator |
| 322 | LKS |
| 33 | second terminal QKD node, "Bob" |
| 330 | phase modulator |
| 331 | photon detector |
| 332 | LKS |
| 4 | AWG |
| 5 | photon pulse |
| 6 | secret key |
| 7 | QKD key |

**Claims**

1. A method for relaying a secret key (6) within a quantum key distribution, QKD, network, QKDN, (1), wherein

    - a first QKD node of a first QLine (2) of a QKDN (1) and a second QKD node of the first QLine (2) sift a first QKD key (7) from photon pulses (5) emitted by an Alice terminal QKD node (20) of the first QLine (2) having a first wavelength and detected by a Bob terminal QKD node (23) of the first QLine (2), the Alice terminal QKD node (20) and the first QKD node linked to an input side of an arrayed wavelength grating, AWG, (4), and the Bob terminal QKD node (23) and the second QKD node linked to an output side of the AWG (4);

    - a first QKD node of a second QLine (3) of the QKDN (1) and a second QKD node of the second QLine (3) sift a second QKD key (7) from photon pulses (5) emitted by an Alice terminal QKD node (30) of the second QLine (3) having a second wavelength different from the first wavelength and detected by a Bob terminal QKD node (33) of the second QLine (3), the Alice terminal node (30) and the first QKD node linked to the input side of the AWG (4) and the Bob terminal QKD node (33) and the second QKD node linked to the output side of the AWG (4), the first QLine (2) and the second QLine (3) sharing the second QKD node and the Bob terminal QKD node (23, 33);

    - the first QKD node of the first QLine (2) relays a secret key (6) xored with the sifted first QKD key (7) to the shared second QKD node and the shared second QKD node relays the secret key (6) to the first QKD node of the second QLine (3) xored with the sifted second QKD key (7).

2. The method according to claim 1, wherein the shared second QKD node is the shared Bob terminal QKD node (23, 33) or an intermediate QKD node (21, 22, 31, 32) linked to the output side of the AWG (4) and shared by the first QLine (2) and the second QLine (3) and/or the first QKD node of the first QLine (2) is the Alice terminal QKD node (20) or an intermediate QKD node exclusive to the first QLine (2) and/or the first QKD node of the second QLine (3) is the Alice terminal QKD node (30) of the second QLine (3) or an intermediate QKD node exclusive to the second QLine (3).

3. The method according to claim 1 or 2, wherein the shared second QKD node buffers the sifted first QKD key (7) in a local key storage, LKS, (212, 222, 232, 312, 322, 332) of the shared second QKD node and xors the relayed xored secret key (6) with the buffered first QKD key (7) and with the sifted second QKD key (7) or wherein the shared second QKD node xors the sifted first QKD key (7) with the sifted second QKD key (7) resulting in a transitional QKD key, buffers the transitional QKD key and xors the relayed xored secret key (6) with the buffered transitional QKD key.

4. The method according to one of claims 1 to 3, wherein each polarized photon pulse (5) is randomly phase-shifted by each QKD node of the respective QLine (2, 3).

5. The method according to claim 4, wherein randomly phase-shifting comprises applying a phase-shift $\phi_p = \pi(b_p/2 + s_p)$ to the polarized photon pulse (5), wherein $\phi_p$ is the phase-shift determined by a p-th QKD node and $b_p$, $s_p$ are random basis and key bits, respectively, determined by the p-th QKD node.

6. The method according to claim 5, wherein sifting the QKD key (7) comprises determining each bit of the QKD key (7) dependent on $b_p$, $s_p$ published by the Bob terminal QKD node (20, 30).

7. The method according to one of claims 1 to 6, wherein a partition of a composed secret key is relayed as the secret key (6), different partitions of the composed secret key being relayed by different shared second QKD nodes, or wherein a precursor key of a derived secret key is relayed as the secret key (6), different precursor keys of the derived secret key being relayed by different shared second QKD nodes.

8. The method according to one of claims 1 to 7, wherein the secret key (6) is relayed within a QKDN (1) comprising a plurality of QLines (2, 3) linked to the AWG (4).

9. A quantum key distribution, QKD, network, QKDN, (1), comprising a first QLine (2) using photon pulses having a first wavelength and a second QLine (3) using photon pulses having a second wavelength different from the first wavelength, the first QLine (2) and the second QLine (3) linked to an arrayed waveguide grating, AWG, (4), having different Alice terminal QKD nodes (20, 30) and sharing a Bob terminal QKD node (23, 33), the QKDN (1) configured for carrying out a method according to one of claims 1 to 8.

10. The QKDN according to claim 9, wherein each Alice terminal QKD node (20, 30) comprises a polarized photon pulse emitter (201, 301) and/or the Alice terminal QKD node (20) of the first QLine (2) is configured for emitting photon pulses (5) having the first wavelength and/or the Alice terminal QKD node (30) of the second QLine (3) is configured for emitting photon pulses (5) having the second wavelength.

11. The QKDN according to claim 9 or 10, wherein the shared Bob terminal QKD node (23, 33) comprises a polarized photon pulse detector (231, 331) and/or is configured for detecting photon pulses (5) having the first wavelength and photon pulses (5) having the second wavelength.

12. The QKDN according to one of claims 9 to 11, wherein each QKD node of each QLine (2, 3) comprises a phase modulator (200, 210, 220, 230, 300, 310, 320, 330) and/or is configured for applying a random phase-shift to each polarized photon pulse (5) and/or comprises a local key storage, LKS, (212, 222, 232, 312, 322, 332) and/or is configured for buffering a sifted first QKD key (7) or a transitional QKD key resulting from xoring a sifted first QKD key (7) with a sifted second QKD key (7) and/or each first QKD node comprises a key derivation function, KDF, (203, 303).

13. The QKDN according to one of claims 9 to 12, wherein at least one Qline (2, 3) of the first and second Qlines (2, 3) comprises at least one intermediate QKD node (21, 22, 31, 32) different from both the respective Alice terminal QKD node (20, 30) and the shared Bob terminal QKD node (23, 33).

14. The QKDN according to claim 13, wherein the at least one intermediate QKD node (21, 22, 31, 32) is shared by the first QLine (2) and the second QLine (3) and linked to an output side of the AWG (4) or exclusive to either the first QLine (2) or the second QLine (3) and linked to an input side of the AWG (4).

15. The QKDN according to one of claims 9 to 14, comprising a plurality of QLines (2, 3) linked to the AWG (4).

**Amended claims in accordance with Rule 137(2) EPC.**

1. A method for relaying a secret key (6) within a quantum key distribution, QKD, network, QKDN, (1), wherein

> - a first QKD node of a first QLine (2) of a QKDN (1) and a second QKD node of the first QLine (2) sift a first QKD key (7) from photon pulses (5) emitted by an Alice terminal QKD node (20) of the first QLine (2) having a first wavelength and detected by a Bob terminal QKD node (23) of the first QLine (2), the Alice terminal QKD node (20) and the first QKD node linked to an input side of an arrayed wavelength grating, AWG, (4), and the Bob terminal QKD node (23) and the second QKD node linked to an output side of the AWG (4);
> - a first QKD node of a second QLine (3) of the QKDN (1) and a second QKD node of the second QLine (3) sift a second QKD key (7) from photon pulses (5) emitted by an Alice terminal QKD node (30) of the second QLine (3) having a second wavelength different from the first wavelength and detected by a Bob terminal QKD node (33) of the second QLine (3), the Alice terminal node (30) and the first QKD node linked to the input side of the AWG (4) and the Bob terminal QKD node (33) and the second QKD node linked to the output side of the AWG (4), **characterized in that** the first QLine (2) and the second QLine (3) sharing the second QKD node and the Bob terminal QKD node (23, 33); and **in that**
- the first QKD node of the first QLine (2) relays a secret key (6) xored with the sifted first QKD key (7) to the shared second QKD node and the shared second QKD node relays the secret key (6) to the first QKD node of the second QLine (3) xored with the sifted second QKD key (7).

2. The method according to claim 1, wherein the shared second QKD node is the shared Bob terminal QKD node (23, 33) or an intermediate QKD node (21, 22, 31, 32) linked to the output side of the AWG (4) and shared by the first QLine (2) and the second QLine (3) and/or the first QKD node of the first QLine (2) is the Alice terminal QKD node (20) or an intermediate QKD node exclusive to the first QLine (2) and/or the first QKD node of the second QLine (3) is the Alice terminal QKD node (30) of the second QLine (3) or an intermediate QKD node exclusive to the second QLine (3).

3. The method according to claim 1 or 2, wherein the shared second QKD node buffers the sifted first QKD key (7) in a local key storage, LKS, (212, 222, 232, 312, 322, 332) of the shared second QKD node and xors the relayed xored secret key (6) with the buffered first QKD key (7) and with the sifted second QKD key (7) or wherein the shared second QKD node xors the sifted first QKD key (7) with the sifted second QKD key (7) resulting in a transitional QKD key, buffers the transitional QKD key and xors the relayed xored secret key (6) with the buffered transitional QKD key.

4. The method according to one of claims 1 to 3, wherein each polarized photon pulse (5) is randomly phase-shifted by each QKD node of the respective QLine (2, 3).

5. The method according to claim 4, wherein randomly phase-shifting comprises applying a phase-shift $\phi_p = \pi(b_p/2 + s_p)$ to the polarized photon pulse (5), wherein $\phi_p$ is the phase-shift determined by a p-th QKD node and $b_p, s_p$ are random basis and key bits, respectively, determined by the p-th QKD node.

6. The method according to claim 5, wherein sifting the QKD key (7) comprises determining each bit of the QKD key (7) dependent on $b_p, s_p$ published by the Bob terminal QKD node (20, 30).

7. The method according to one of claims 1 to 6, wherein a partition of a composed secret key is relayed as the secret key (6), different partitions of the composed secret key being relayed by different shared second QKD nodes, or wherein a precursor key of a derived secret key is relayed as the secret key (6), different precursor keys of the derived secret key being relayed by different shared second QKD nodes.

8. The method according to one of claims 1 to 7, wherein the secret key (6) is relayed within a QKDN (1) comprising a plurality of QLines (2, 3) linked to the AWG (4).

9. A quantum key distribution, QKD, network, QKDN, (1), comprising a first QLine (2) using photon pulses having a first wavelength and a second QLine (3) using photon pulses having a second wavelength different from the first wavelength, the first QLine (2) and the second QLine (3) linked to an arrayed waveguide grating, AWG, (4), having different Alice terminal QKD nodes (20, 30) and sharing a Bob terminal QKD node (23, 33), the QKDN (1) configured for carrying out a method according to one of claims 1 to 8.

10. The QKDN according to claim 9, wherein each Alice terminal QKD node (20, 30) comprises a polarized photon pulse emitter (201, 301) and/or the Alice terminal QKD node (20) of the first QLine (2) is configured for emitting photon pulses (5) having the first wavelength and/or the Alice terminal QKD node (30) of the second QLine (3) is configured for emitting photon pulses (5) having the second wavelength.

11. The QKDN according to claim 9 or 10, wherein the shared Bob terminal QKD node (23, 33) comprises a polarized photon pulse detector (231, 331) and/or is configured for detecting photon pulses (5) having the first wavelength and photon pulses (5) having the second wavelength.

12. The QKDN according to one of claims 9 to 11, wherein each QKD node of each QLine (2, 3) comprises a phase modulator (200, 210, 220, 230, 300, 310, 320, 330) and/or is configured for applying a random phase-shift to each polarized photon pulse (5) and/or comprises a local key storage, LKS, (212, 222, 232, 312, 322, 332) and/or is configured for buffering a sifted first QKD key (7) or a transitional QKD key resulting from xoring a sifted first QKD key (7) with a sifted second QKD key (7) and/or each first QKD node comprises a key derivation function, KDF, (203, 303).

13. The QKDN according to one of claims 9 to 12, wherein at least one Qline (2, 3) of the first and second Qlines (2, 3) comprises at least one intermediate QKD node (21, 22, 31, 32) different from both the respective Alice terminal QKD node (20, 30) and the shared Bob terminal QKD node (23, 33).

14. The QKDN according to claim 13, wherein the at least one intermediate QKD node (21, 22, 31, 32) is shared by the first QLine (2) and the second QLine (3) and linked to an output side of the AWG (4) or exclusive to either the first QLine (2) or the second QLine (3) and linked to an input side of the AWG (4).

15. The QKDN according to one of claims 9 to 14, comprising a plurality of QLines (2, 3) linked to the AWG (4).

Fig. 1

Fig. 2

Fig. 3

| | Europäisches Patentamt European Patent Office Office européen des brevets | **EUROPEAN SEARCH REPORT** | **Application Number** EP 24 17 3139 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 616 048 A (TOSHIBA KK [JP]) 30 August 2023 (2023-08-30) | 1-3,7-15 | INV. H04L9/08 |
| Y | * pages 11,14-16; figures 2A, 2B * ----- | 4-6 | |
| Y,D | MINA DOOSTI ET AL: "Establishing shared secret keys on quantum line networks: protocol and security", ARXIV.ORG, CORNELL UNIVERSITY LIBRARY, 201 OLIN LIBRARY CORNELL UNIVERSITY ITHACA, NY 14853, 4 April 2023 (2023-04-04), XP091477155, * section 3 * ----- | 4-6 | |
| T | KAORU KENYOSHI NICT JAPAN: "Proposed modifications to the draft Recommendation ITU-T Y.QKDN_KM: "Key management for Quantum Key Distribution Network";C774-R1", ITU-T DRAFT; STUDY PERIOD 2017-2020; STUDY GROUP 13; SERIES C774-R1, INTERNATIONAL TELECOMMUNICATION UNION, GENEVA ; CH , vol. 16/13 7 October 2019 (2019-10-07), pages 1-20, XP044274679, Retrieved from the Internet: URL:https://www.itu.int/ifa/t/2017/sg13/docs/c/ties/T17-SG13-C-0774!R1!MSW-E.docx [retrieved on 2019-10-07] * section 10 * ----- | 1-15 | **TECHNICAL FIELDS SEARCHED (IPC)** H04L |

The present search report has been drawn up for all claims

| Place of search | Date of completion of the search | Examiner |
|---|---|---|
| Munich | 14 October 2024 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P4C01)

**EP 4 645 750 A1**

## ANNEX TO THE EUROPEAN SEARCH REPORT
## ON EUROPEAN PATENT APPLICATION NO.

EP 24 17 3139

14-10-2024

| Patent document cited in search report | | Publication date | Patent family member(s) | | Publication date |
|---|---|---|---|---|---|
| GB 2616048 | A | 30-08-2023 | GB | 2616048 A | 30-08-2023 |
| | | | JP | 7392065 B2 | 05-12-2023 |
| | | | JP | 2023124774 A | 06-09-2023 |
| | | | US | 2023275754 A1 | 31-08-2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. DOOSTI et al.** Establishing shared secret keys on quantum line networks: protocol and security. *arXiv preprint arXiv:2304.01881*, 2023